Europäisches Patentamt

European Patent Office

Office européen des brevets

(19)

(11) **EP 0 851 646 A1**

(12) **DEMANDE DE BREVET EUROPEEN**

(43) Date de publication:
**01.07.1998 Bulletin 1998/27**

(51) Int. Cl.⁶: $H04M\ 1/60$, $H04M\ 1/76$

(21) Numéro de dépôt: **97204005.9**

(22) Date de dépôt: **18.12.1997**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **31.12.1996 FR 9616261**

(71) Demandeur:
**Philips Electronics N.V.
5621 BA Eindhoven (NL)**

(72) Inventeurs:
• **Bailly, Patrick
75008 Paris (FR)**
• **Delbecq, Dominique
75008 Paris (FR)**

(74) Mandataire: **Caron, Jean
Société Civile S.P.I.D.
156, Boulevard Haussmann
75008 Paris (FR)**

(54) **Appareil téléphonique à compensation de pertes en ligne**

(57) La présente invention concerne un appareil téléphonique comportant :

. un pont redresseur GB, destiné à être relié à une ligne téléphonique, et à délivrer un courant de ligne redressé,
. un module d'interface INT permettant l'émission de signaux en direction de la ligne téléphonique, et délivrant un courant d'information Iin,
. un amplificateur AGC dont le gain est proportionnel à la valeur d'un courant de contrôle Icnt.

Selon l'invention, cet appareil téléphonique comporte un module de contrôle CNT, délivrant un courant Icnt proportionnel à l'exponentielle d'une équation linéaire de l'inverse de la valeur du signal d'information Iin.

Le gain $G(V/V)$ de l'amplificateur AGC s'écrit alors $G(V/V)=K'1.exp((K'2/Iin)-K'3)$ et permet de compenser l'atténuation subie par le signal lors de son transport au travers de la ligne téléphonique.

Applications : Terminaux téléphoniques filaires.

FIG.1

Printed by Xerox (UK) Business Services
2.16.3/3.4

## Description

La présente invention concerne un appareil téléphonique comportant :

. un pont redresseur, muni de deux bornes dites alternatives destinées à être reliées à une ligne téléphonique, d'une première et d'une deuxième bornes dites continues destinées respectivement à délivrer et à recevoir un courant redressé appelé courant de ligne,

. un module dit d'interface, connecté entre les bornes continues du pont redresseur et muni d'au moins une entrée destinée à recevoir un signal à émettre en direction de la ligne téléphonique, et d'une sortie destinée à délivrer un signal d'information dont la valeur est représentative de la valeur moyenne du courant de ligne, et

. un amplificateur, muni d'une entrée de signal destinée à recevoir un signal à émettre vers la ligne téléphonique, d'une sortie reliée à l'entrée du module d'interface, et d'une entrée de contrôle destinée à recevoir un signal dit de contrôle, la valeur du gain de l'amplificateur étant proportionnelle à celle du dit signal de contrôle.

Dans la plupart des appareils téléphoniques connus, l'amplificateur, dont la fonction est d'amplifier le signal à émettre en vue de compenser les pertes qui seront occasionnées par le transport du dit signal au travers de la ligne téléphonique, reçoit directement le signal d'information issu du module d'interface. Le gain de l'amplificateur est alors proportionnel à la valeur moyenne du courant de ligne. Or, l'atténuation du signal provoquée par la ligne téléphonique n'est pas linéaire par rapport à la longueur de la dite ligne, et donc par rapport à la valeur moyenne du courant de ligne. Elle est notoirement de l'ordre de 1,2 dB/km, et peut être exprimée sous la forme :

$$A(V/V)=K1.exp(-((K2/lin)-K3)),$$

où $A(V/V)$ est l'atténuation du signal, $K1$ étant une constante multiplicative, $K2$ et $K3$ étant des constantes dont les valeurs sont intrinsèques à la ligne et respectivement de l'ordre de 0,033 et 0,497, et $lin$ est la valeur moyenne du courant de ligne. Une compensation linéaire au moyen d'une amplification dont le gain est proportionnel à la valeur moyenne du courant de ligne n'est donc pas parfaite et occasionne des variations du niveau d'écoute suivant la longueur de la ligne téléphonique.

La présente invention a pour but de remédier à cet inconvénient en proposant un appareil téléphonique dans lequel l'équation définissant la valeur du gain de l'amplificateur est de la forme inverse à celle qui définit l'atténuation du signal provoquée par la ligne.

En effet, selon la présente invention, un appareil téléphonique tel que décrit dans le paragraphe introductif est caractérisé en ce qu'il comporte en outre un module dit de contrôle, muni d'une entrée destinée à recevoir un signal d'entrée et reliée à la sortie du module d'interface, et d'une sortie reliée à l'entrée de contrôle de l'amplificateur, la dite sortie du module de contrôle étant destinée à délivrer un signal dont la valeur peut être exprimée sous une forme proportionnelle à l'exponentielle d'une équation linéaire de l'inverse de la valeur du signal d'entrée.

Ainsi, le module de contrôle délivre un signal dont la valeur s'exprime sous la forme $Icnt=K.exp((K'2/lin)-K'3)$. Le gain de l'amplificateur étant proportionnel à cette valeur, l'amplification à laquelle sera soumis le signal à émettre sera de la forme :

$$G(V/V)=K'1.exp((K'2/lin)-K'3),$$

où $G(V/V)$ représente le rapport entre la tension de sortie de l'amplificateur et sa tension d'entrée . Les valeurs de $K'1$, $K'2$ et $K'3$ dépendent du dimensionnement des éléments composant le module de contrôle et l'amplificateur, et peuvent donc être choisies pour que la valeur obtenue pour le gain soit l'inverse de la valeur de l'atténuation. On choisira par exemple $K'1=1/K1$, $K'2=K2$ et $K'3=K3$, ce qui entraîne immédiatement $G(V/V)=1/A(V/V)$ .

Le module de contrôle peut être réalisé de différentes manières. L'une d'elles présente une structure intéressante pour sa simplicité et son économie de surface. Ce mode de réalisation particulier de l'invention est caractérisé en ce que le module de contrôle comporte :

. un module dit translinéaire, muni d'une entrée formant l'entrée du module de contrôle, et d'une sortie destinée à produire un signal dit translinéaire dont la valeur peut être exprimée sous la forme d'une équation linéaire de l'inverse de la valeur du signal d'entrée, et

. un module dit exponentiel, muni d'une entrée destinée à recevoir le signal translinéaire, et d'une sortie formant la sortie du module de contrôle et destinée à délivrer un signal dont la valeur peut être exprimée sous une forme proportionnelle à l'exponentielle de la valeur du signal translinéaire.

La dissociation décrite ci-dessus permet de réaliser séparément deux fonctions élémentaires, le signal de sortie du module translinéaire étant de la forme $Itr=(K'2/lin)-K'3$ , tandis que le signal de sortie du module exponentiel est de la forme $Icnt=K.exp(Itr)$ . Le couplage simple entre ces deux modules permet la combinaison de leurs fonctions et l'obtention de la fonction complexe désirée. En effet, le gain de l'amplificateur étant proportionnel à la valeur du courant de contrôle qui est produit par le module exponentiel, ce gain est donc bien de la forme $G(V/V)=K'1.exp((K'2/lin)-K'3)$ .

Un mode de réalisation du module translinéaire est caractérisé en ce qu'il comporte un premier et un deuxième transistors montés en paire différentielle, et un troisième et un quatrième transistors montés en paire différentielle, les collecteurs des premier et troisième transistors formant respectivement l'entrée et la sortie du module translinéaire, les collecteurs des deuxième et quatrième transistors étant respectivement reliés à une première et une deuxième source de courant, le collecteur du troisième transistor étant relié en outre à une troisième source de courant, les bases des premier et quatrième transistors étant reliées ensemble au collecteur du quatrième transistor, les bases des deuxième et troisième transistors étant reliées ensemble au collecteur du deuxième transistor.

Si Iin est la valeur du courant d'entrée de ce module translinéaire et si Ia, Ib et Ic sont les valeurs des courants débités respectivement par les première, deuxième et troisième sources de courant, il sera démontré dans la suite de l'exposé que la valeur du courant produit à la sortie d'un tel module translinéaire peut s'exprimer sous la forme Itr=(Ia.Ib/Iin)-Ic , ce qui correspond bien à l'équation recherchée

Un mode de réalisation du module exponentiel est caractérisé en ce qu'il comporte deux transistors, dont les émetteurs sont reliés aux bornes d'une résistance, l'une des bornes formant l'entrée du module exponentiel, l'autre borne étant reliée à une borne de potentiel fixé, les bases des transistors étant reliées ensemble au collecteur de l'un des transistors, dont le collecteur et l'émetteur sont reliés respectivement à deux sources de courant destinées à débiter des courants de même valeur nominale, le collecteur de l'autre transistor formant la sortie du module exponentiel.

Si Itr est le courant d'entrée de ce module exponentiel et si Id est la valeur nominale du courant débité par les deux sources de courant, et R la valeur de la résistance, il sera démontré dans la suite de l'exposé que la valeur du courant produit à la sortie d'un tel module exponentiel peut s'exprimer sous la forme Icnt=Id.exp(R.Itr/Vt) , où Vt=k.T/q , k étant la constante de Boltzmann, T la température absolue et q la charge de l'électron, ce qui correspond ben à l'équation recherchée.

La combinaison des deux modules, le module exponentiel recevant en entrée le courant translinéaire, permet donc d'obtenir en sortie du module exponentiel un courant de la forme Icnt=Id.exp(R.((Ia.Ib/Iin)-Ic)/Vt) . Vt introduit une dépendance par rapport à la température, dont il peut être avantageux de s'affranchir. Un mode de réalisation préféré de l'invention est donc caractérisé en ce que la troisième source de courant et l'une des première et deuxième sources de courant du module translinéaire sont agencées pour délivrer un courant dont la valeur est proportionnelle à la valeur de la température absolue à laquelle elles sont soumises.

L'invention sera mieux comprise à l'aide de la description suivante de quelques modes de réalisation, faite à titre d'exemple non-limitatif et en regard des dessins annexés, dans lesquels :

- la figure 1 présente un schéma électrique décrivant partiellement un appareil téléphonique selon l'invention,
- la figure 2 présente un schéma électrique décrivant la structure d'un module de contrôle inclus dans un appareil téléphonique selon un mode de réalisation de l'invention,
- la figure 3 présente un schéma électrique décrivant un module translinéaire inclus dans un appareil téléphonique selon un mode de réalisation particulier de l'invention, et
- la figure 4 présente un schéma électrique décrivant un module exponentiel inclus dans un appareil téléphonique selon un mode de réalisation particulier de l'invention.

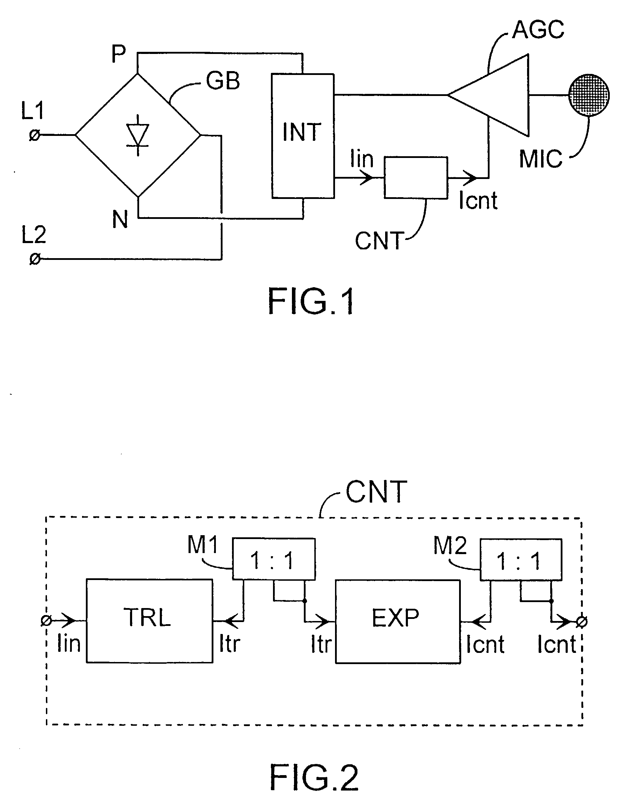

La figure 1 représente partiellement un appareil téléphonique conforme à l'invention. Cet appareil comporte :

. un pont redresseur GB, muni de deux bornes L1 et L2 dites alternatives destinées à être reliées à une ligne téléphonique, d'une première et d'une deuxième bornes P et N dites continues destinées respectivement à délivrer et à recevoir un courant redressé appelé courant de ligne,

. un module INT dit d'interface, connecté entre les bornes continues P et N du pont redresseur GB et muni d'au moins une entrée destinée à recevoir un signal à émettre en direction de la ligne téléphonique, et d'une sortie destinée à délivrer un courant d'information Iin dont la valeur est représentative de la valeur moyenne du courant de ligne, et

. un amplificateur AGC, muni d'une entrée de signal destinée à recevoir un signal à émettre vers la ligne téléphonique, pouvant par exemple provenir d'un microphone MIC, d'une sortie reliée à l'entrée du module d'interface INT, et d'une entrée de contrôle destinée à recevoir un courant Icnt dit de contrôle, la valeur du gain de l'amplificateur étant proportionnelle à celle du dit courant de contrôle Icnt.

Cet appareil téléphonique comporte en outre un module CNT dit de contrôle, muni d'une entrée destinée à recevoir le courant d'information Iin et reliée à la sortie du module d'interface INT, et d'une sortie reliée à l'entrée de contrôle de l'amplificateur AGC, la dite sortie du module de contrôle CNT étant destinée à délivrer un courant Icnt dont la valeur peut être exprimée sous une forme proportionnelle à l'exponentielle d'une équation linéaire de l'inverse de la valeur du signal d'information Iin, c'est-à-dire Icnt=K.exp((K'2/Iin)-K'3) . Le gain G(V/V) de l'amplificateur AGC, étant proportionnel à la valeur du courant de commande Icnt, s'écrit alors G(V/V)=K'1.exp((K'2/Iin)-K'3) .

L'amplification obtenue au moyen de l'amplificateur AGC permet, par un bon choix des paramètres K'1, K'2 et K'3, de compenser l'atténuation que subira le signal à émettre lors de son transport au travers de la ligne téléphonique.

La figure 2 représente schématiquement un module de contrôle CNT inclus dans un appareil téléphonique conforme à l'invention. Ce module de contrôle comporte :

.    un module TRL dit translinéaire, muni d'une entrée formant l'entrée du module de contrôle CNT, et d'une sortie destinée à produire un courant Itr dit translinéaire dont la valeur peut être exprimée sous la forme d'une équation linéaire de l'inverse de la valeur du signal d'entrée, et

.    un module EXP dit exponentiel, muni d'une entrée destinée à recevoir le courant translinéaire Itr, et d'une sortie formant la sortie du module de contrôle CNT et destinée à délivrer un courant Icnt dont la valeur peut être exprimée sous une forme proportionnelle à l'exponentielle de la valeur du courant translinéaire Itr.

Dans les modes de réalisation particuliers décrits dans cet exposé, les courants Itr et Icnt produits à la sortie des modules translinéaire et exponentiel, respectivement TRL et EXP, sont des courants entrants. Des miroirs de courant M1 et M2 sont donc utilisés pour en générer des copies, en vue de leur utilisation par des éléments disposés à la suite des dits modules.

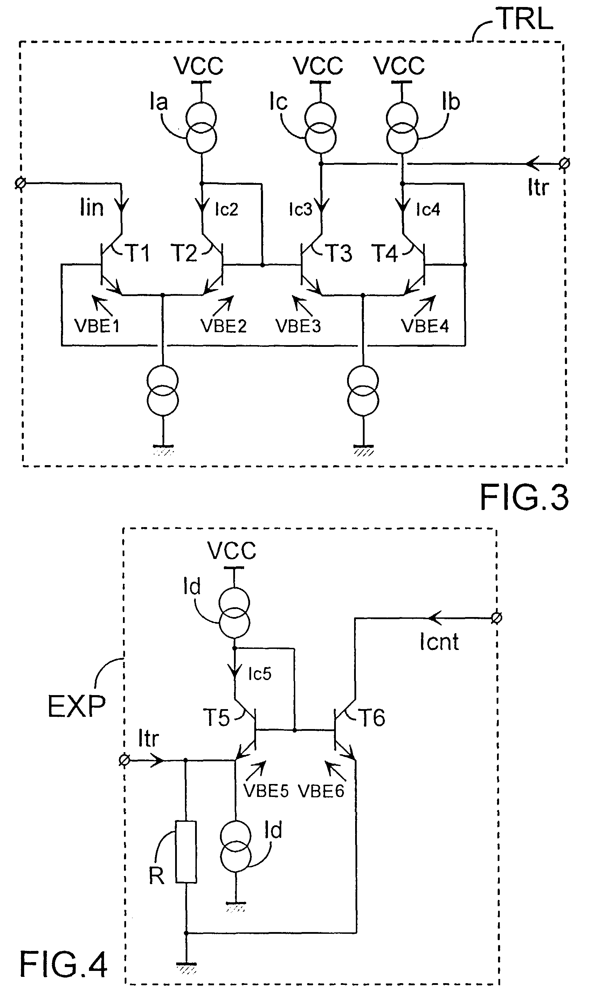

La figure 3 représente schématiquement un module translinéaire TRL conforme à un mode de réalisation particulier de l'invention. Ce module translinéaire comporte un premier et un deuxième transistors T1 et T2 montés en paire différentielle, et un troisième et un quatrième transistors T3 et T4 montés en paire différentielle. Les collecteurs des premier et troisième transistors T1 et T3 forment respectivement l'entrée et la sortie du module translinéaire TRL, et sont parcourus respectivement par les courants Iin et Itr. Les collecteurs des deuxième et quatrième transistors T2 et T4 sont respectivement reliés à une première et une deuxième source de courant Ia et Ib. Le collecteur du troisième transistor T3 est relié en outre à une troisième source de courant Ic. Les bases des premier et quatrième transistors T1 et T4 sont reliées ensemble au collecteur du quatrième transistor T4. Les bases des deuxième et troisième transistors T2 et T3 sont reliées ensemble au collecteur du deuxième transistor T2. L'équation du courant translinéaire Itr peut être déterminée comme suit : la somme des tensions base-émetteur VBE est nulle. Ceci s'écrit VBE1-VBE2+VBE3-VBE4=0 . Les transistors T1, T2, T3 et T4 sont supposés identiques, aux fluctuations induites par le procédé de fabrication près. Par conséquent, Iin/Ic2=Ic4/Ic3 , ou encore Ic3=Ic2.Ic4/Iin . En négligeant les courants de base devant les courants de collecteur, ceci donne Ic3=Ia.Ib/Iin . De plus, Itr=Ic3-Ic ,

ce qui donne l'équation du courant translinéaire Itr=(Ia.Ib/Iin)-Ic . Il s'agit bien d'une équation linéaire de l'inverse du courant d'information Iin.

La figure 4 représente schématiquement un module exponentiel EXP conforme à un mode de réalisation particulier de l'invention. Ce module exponentiel comporte deux transistors T5 et T6, dont les émetteurs sont reliés aux bornes d'une résistance R. L'une des bornes de cette résistance R forme l'entrée du module exponentiel EXP, destinée à recevoir le courant translinéaire Itr, l'autre borne étant reliée à une borne de potentiel fixé, ici la masse du circuit. Les bases des transistors T5 et T6 sont reliées ensemble au collecteur du transistor T5. Le collecteur et l'émetteur du transistor T5 sont reliés respectivement à deux sources de courant destinées à débiter des courants de même valeur nominale Id. le collecteur du transistor T6 forme la sortie du module exponentiel et produit le courant de contrôle Icnt. L'équation de ce courant de contrôle Icnt peut être déterminée comme suit : la somme des tensions base-émetteur VBE et de la tension aux bornes de la résistance R est nulle. Ceci s'écrit : VBE6=VBE5+R.Itr . Les transistors T5 et T6 sont supposés identiques, aux fluctuations induites par le procédé de fabrication près. Par conséquent, Vt.ln(Icnt/Ic5)=R.Itr , ce qui peut s'écrire sous la forme Icnt=Ic5.exp(R.Itr/Vt) . En supposant les courants de base négligeables devant les courants de collecteur, on obtient alors l'équation du courant produit à la sortie du module exponentiel : Icnt=Id.exp(R.Itr/Vt) . Si le courant translinéaire provient d'un module translinéaire tel que décrit plus haut, ceci donne :

$$Icnt=Id.exp(R.((Ia.Ib/Iin)-Ic)/Vt)$$

Le terme Vt introduit une dépendance par rapport aux variations de la température, puisque Vt=k.T/q . On peut avantageusement s'affranchir de cette dépendance en choisissant pour la réalisation de la troisième source de courant Ic, et pour la réalisation de la première ou de la deuxième source de courant Ia ou Ib, des sources du type PTAT, c'est-à-dire agencées pour délivrer un courant dont la valeur est proportionnelle à la valeur de la température absolue à laquelle elles sont soumises. La structure de ce type de source de courant est bien connue du spécialiste. Le courant de sortie Is d'une telle source de courant est proportionnel à Vt. L'équation du courant de contrôle Icnt ainsi obtenue est de la forme Icnt=K.exp((K'2/Iin)-K'3) , dans laquelle tous les paramètres sont indépendants de la température.

## Revendications

1.   Appareil téléphonique comportant :

.    un pont redresseur, muni de deux bornes dites alternatives destinées à être reliées à une ligne téléphonique, d'une première et d'une deuxième bornes dites continues destinées respectivement à délivrer et à recevoir un courant redressé appelé courant de ligne,

. un module dit d'interface, connecté entre les bornes continues du pont redresseur et muni d'au moins une entrée destinée à recevoir un signal à émettre en direction de la ligne téléphonique, et d'une sortie destinée à délivrer un signal d'information dont la valeur est représentative de la valeur moyenne du courant de ligne, et

. un amplificateur, muni d'une entrée de signal destinée à recevoir un signal à émettre vers la ligne téléphonique, d'une sortie reliée à l'entrée du module d'interface, et d'une entrée de contrôle destinée à recevoir un signal dit de contrôle, la valeur du gain de l'amplificateur étant proportionnelle à celle du dit signal de contrôle,

caractérisé en ce qu'il comporte en outre un module dit de contrôle, muni d'une entrée destinée à recevoir un signal d'entrée et reliée à la sortie du module d'interface, et d'une sortie reliée à l'entrée de contrôle de l'amplificateur, la dite sortie du module de contrôle étant destinée à délivrer un signal dont la valeur peut être exprimée sous une forme proportionnelle à l'exponentielle d'une équation linéaire de l'inverse de la valeur du signal d'entrée.

2. Appareil téléphonique selon la revendication 1, caractérisé en ce que le module de contrôle comporte :

. un module dit translinéaire, muni d'une entrée formant l'entrée du module de contrôle, et d'une sortie destinée à produire un signal dit translinéaire dont la valeur peut être exprimée sous la forme d'une équation linéaire de l'inverse de la valeur du signal d'entrée, et

. un module dit exponentiel, muni d'une entrée destinée à recevoir le signal translinéaire, et d'une sortie formant la sortie du module de contrôle et destinée à délivrer un signal dont la valeur peut être exprimée sous une forme proportionnelle à l'exponentielle de la valeur du signal translinéaire.

3. Appareil téléphonique selon la revendication 2, caractérisé en ce que le module translinéaire comporte un premier et un deuxième transistors montés en paire différentielle, et un troisième et un quatrième transistors montés en paire différentielle, les collecteurs des premier et troisième transistors formant respectivement l'entrée et la sortie du module translinéaire, les collecteurs des deuxième et quatrième transistors étant respectivement reliés à une première et une deuxième source de courant, le collecteur du troisième transistor étant relié en outre à une troisième source de courant, les bases des premier et quatrième transistors étant reliées ensemble au collecteur du quatrième transistor, les bases des deuxième et troisième transistors étant reliées ensemble au collecteur du deuxième transistor.

4. Appareil téléphonique selon la revendication 3, caractérisé en ce que la troisième source de courant et l'une des première et deuxième sources de courant sont agencées pour délivrer un courant dont la valeur est proportionnelle à la valeur de la température absolue à laquelle elles sont soumises.

5. Appareil téléphonique selon l'une quelconque des revendications 2 à 4, caractérisé en ce que le module exponentiel comporte deux transistors, dont les émetteurs sont reliés aux bornes d'une résistance, l'une des bornes formant l'entrée du module exponentiel, l'autre borne étant reliée à une borne de potentiel fixé, les bases des transistors étant reliées ensemble au collecteur de l'un des transistors, dont le collecteur et l'émetteur sont reliés respectivement à deux sources de courant destinées à débiter des courants de même valeur nominale, le collecteur de l'autre transistor formant la sortie du module exponentiel.

FIG.1

FIG.2

FIG.3

FIG.4

7

**Office européen des brevets**

## RAPPORT DE RECHERCHE EUROPEENNE

Numéro de la demande

EP 97 20 4005

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | EP 0 063 748 A (LICENTIA GMBH) <br> * page 4, ligne 25 - page 14, ligne 31; figures 1-7 * | 1 | H04M1/60 <br> H04M1/76 |
| Y | EP 0 102 660 A (PHILIPS ELECTRONIC AND ASSOCIATED INDUSTRIES LTD) <br> * page 4, ligne 10 - page 12, ligne 23; figures 1-3 * | 1 | |
| A | EP 0 524 547 A (SIEMENS AG) <br> * colonne 1, ligne 54 - colonne 6, ligne 30; figures 1,2 * | 1 | |
| A | EP 0 353 808 A (RADIOTECHNIQUE COMPELEC) <br> * colonne 3, ligne 27 - colonne 10, ligne 40; figures 1-11 * | 1 | |
| A | EP 0 271 947 A (ALCATEL NV) <br> * page 2, ligne 1 - page 4, ligne 33; figure 1 * | 1 | |
| | | | DOMAINES TECHNIQUES RECHERCHES (Int.Cl.6) |
| | | | H04M |

Le présent rapport a été établi pour toutes les revendications

| Lieu de la recherche | Date d'achèvement de la recherche | Examinateur |
|---|---|---|
| LA HAYE | 27 mars 1998 | Delangue, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)